# EUROPÄISCHE PATENTSCHRIFT

(11) **EP 1 714 917 B1**
(45) Veröffentlichungstag und Bekanntmachung des Hinweises auf die Patenterteilung: **03.06.2009**
(21) Anmeldenummer: 06008078.5
(22) Anmeldetag: 19.04.2006
(51) Int. Cl.: B65G 13/07, B65G 13/11, B65G 21/06

(54) **Rollenförderer**
Roller conveyor
Convoyeur à rouleaux

(30) Priorität: 19.04.2005 DE 202005006253 U
(43) Veröffentlichungstag der Anmeldung: 25.10.2006
(73) Patentinhaber: KRONES Aktiengesellschaft, 93073 Neutraubling (DE)
(72) Erfinder: Hahn, Wolfgang, 93093 Donaustauf (DE); Schlieper, Ulrich, 93191 Rettenbach (DE)

(56) Entgegenhaltungen:
- DE-A1- 10 241 348
- US-A- 4 405 050
- US-A- 4 815 588

## Beschreibung

Die Erfindung betrifft einen Rollenförderer nach dem Oberbegriff des Anspruchs 1 sowie ein Modul für einen derartigen Rollenförderer gemäß Anspruch 9.

Rollenförderer mit stationär drehbar in einem Traggestell gelagerten Rollen zum Fördern von Paletten oder dgl. sind beispielsweise aus DE 102 41 348 A1 bekannt. Bei dieser Art von Förderern wird die Förderebene durch eine Vielzahl von parallelen, quer zur Förderrichtung ausgerichteten antreibbaren Rollen gebildet, die mit ihren Enden in zwei mit Zwischenabstand parallel längs zur Förderrichtung verlaufenden Wangen drehbar gelagert sind, wobei die Wangen die Seitenteile des Traggestells bilden. Jede der Rollen verfügt an wenigstens einem Ende über ein Antriebsrad, z.B. Kettenritzel, das mit einem Zugmittel zur Kraftübertragung in Eingriff steht. Als Zugmittel wird bevorzugt eine Rollenkette verwendet.

Zur Unfallverhütung ist für die Antriebsräder und das Zugmittel eine einen Eingriffsschutz bildende Abdeckung vorhanden, die in der Regel in Form eines Kammblechs ausgebildet ist. Diese Bleche erstrecken sich längs einer Wange und sind so ausgebildet, dass ein solches Kammblech eine Vielzahl von nebeneinander liegenden Antriebsrädern der Förderrollen abdeckt. Da bei einer aus mehreren Abschnitten gebildeten Förderanlage die Länge der einzelnen Abschnitte aus planungstechnischen Gründen nicht immer gleich lang ausführbar ist, müssen diese zur Verkleidung dienenden Bleche nachteiliger Weise in unterschiedlichen Längen angefertigt werden. Dies verursacht einen erhöhten Aufwand bei Herstellung und Montage. Gleiches gilt für die Kettenführungen, die auch zur Abstützung des Kettenober- und -untertrums dienen.

Der Erfindung liegt demzufolge die Aufgabe zu Grunde, diesbezüglich eine verbesserte Ausführungsform eines Rollenförderers anzugeben.

Gelöst wird diese Aufgabe durch die kennzeichnenden Merkmale des Anspruchs 1 und durch ein entsprechendes Modul gemäß Anspruch 9 für einen Rollenförderer der in Rede stehenden Bauart.

Dadurch, dass wenigstens ein Teil des Eingriffsschutzes und/oder der zugmittelführungen aus einer Vielzahl von einzelnen, standardisierten Modulen, nämlich vorzugsweise einem Modul pro Rolle gebildet wird, ist die Herstellung und Montage der Abdeckung und/oder der Zugnictelführungen unabhängig von den ggf. unterschiedlichen Maßen einzelner Förderabschnitte mit geringem Aufwand realisierbar.

Gemäß einer vorteilhaften Weiterbildung sind die Module so ausgebildet, dass sie neben der Abdeckfunktion für wenigstens das Antriebsrad zugleich auch eine unterstützende Auflage und/oder Führung für das die Rollen antreibende Zugmittel bilden.

Eine schnelle, ggf. ohne Verwendung von Werkzeug ausführbare Montage der Module ist entsprechend einer vorteilhaften Weiterbildung durch formschlüssig zusammenwirkende Befestigungselemente erreichbar. Diese Befestigungselemente können beispielsweise einerseits als Zapfen und andererseits als Löcher ausgebildet werden, wobei bevorzugt die Zapfen an den Modulen angeformt und die Löcher, beispielsweise in Form von Lochrastern, in den die Rollen tragenden Wangen eingeformt sind.

Günstigerweise sind die Module bevorzugt als einstückige Bauteile ausgebildet, die als kostengünstige Spritzgussteile herstellbar sind. Als Werkstoff kommt insbesondere Kunststoff in Betracht.

Sollten in bestimmten Förderabschnitten einzelne Rollen mit verschiedenen Zwischenabständen positionierbar sein müssen, können Füllstücke vorgesehen werden, die zwischen benachbarte Module einfügbar sind, um offene Lücken zu vermeiden.

Nachfolgend wird ein bevorzugtes Ausführungsbeispiel anhand der Figuren beschrieben. Es zeigt:
- Fig. 1: eine perspektivische Teilansicht eines Rollenförderers mit einem Eingriffsschutz,
- Fig. 2: eine Vorderansicht des Rollenförderers nach Fig. 1 in Transportrichtung betrachtet,

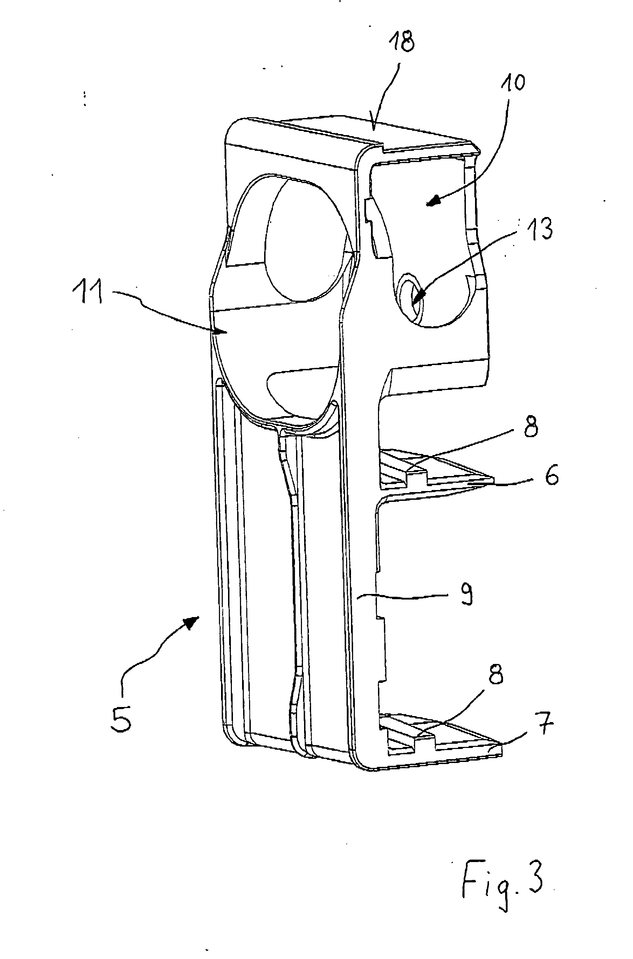

- Fig. 3: ein Modul des Eingriffsschutzes nach Fig. 1 und 2 in einer ersten perspektivischen Darstellung,
- Fig. 4: das Modul nach Fig. 3 in einer zweiten perspektivischen Darstellung und
- Fig. 5: eine Vorderansicht analog zu Fig. 2 mit einer einen abgewandelten Querschnitt aufweisenden Modulvariante.

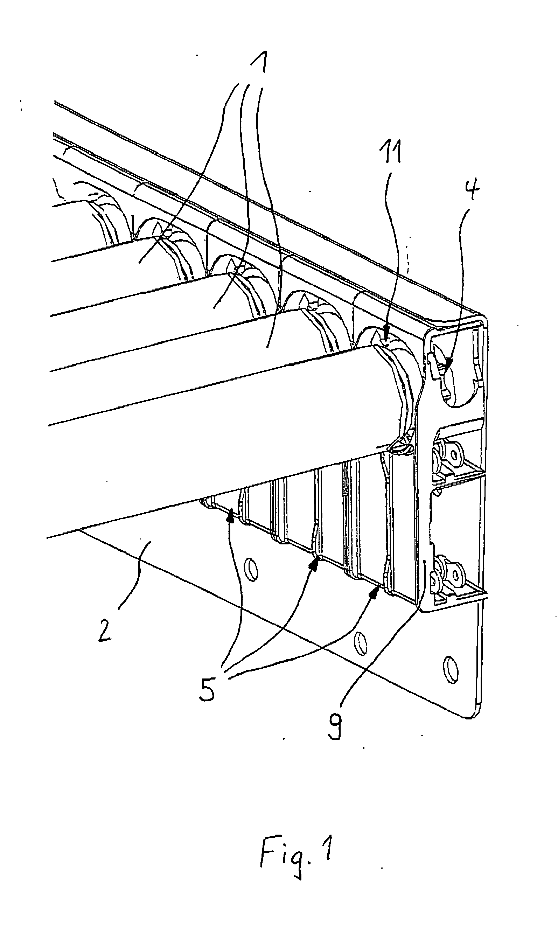

Fig. 1 zeigt nur einen Teilausschnitt eines Rollenförderers, und zwar seine Antriebsseite. Rollenförderer der dargestellten Bauart werden überwiegend zum Transportieren von leeren oder beladenen Paletten eingesetzt. Die Lasttragfläche wird durch eine Vielzahl von parallel zueinander und quer zur Transportrichtung ausgerichtete Rollen 1 gebildet, die zwischen zwei separaten, mit Abstand parallel zur Transportrichtung verlaufenden Wangen 2 frei drehbar gelagert sind. Die in Fig. 1 nicht gezeigte zweite Wange ist spiegelbildlich zur Wange 2 gestaltet. Die normalerweise in einem gleichmäßigen Teilungsraster angeordneten Rollen 1 nehmen die Traglast auf und übertragen sie auf die aus Stahlblech gebildeten Wangen 2, die in Verbindung mit nicht dargestellten Standbeinen das Gestell des Rollenförderers bilden.

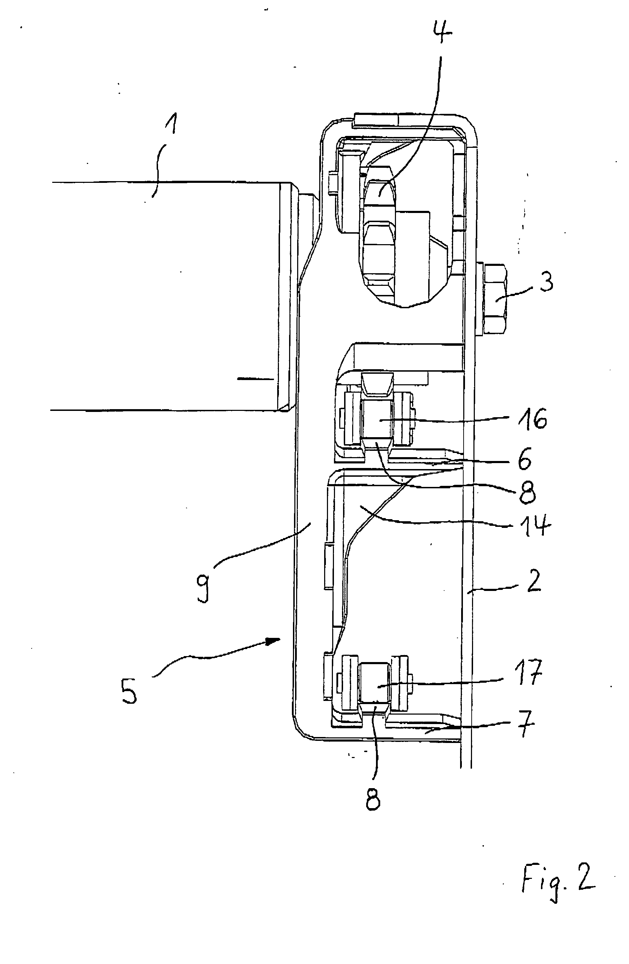

Wie insbesondere aus Fig. 2 erkennbar, ist jede Rolle 1 mit einer Schraube 3 am langen, vertikalen Schenkel der insgesamt L-förmigen wange 2 befestigt, während der kürzere horizontale Schenkel mit seinem freien Ende zu den Rollen 1 weist. An jeder Rolle 1 befindet sich an einem Ende ein verdrehfest angebrachtes Ritzel 4, das zur Übertragung eines Antriebsdrehmoments auf die Rolle 1 dient und zwischen der Rolle und dem vertikalen Schenkel der Wange 2 angeordnet ist.

Die Ritzel 4 stehen in tangentialem Eingriff mit dem Kettenobertrum 16 einer zur Kraftübertragung dienenden endlosen Rollenkette, deren Kettenuntertrum 17 mit Zwischenabstand zum Obertrum unter diesem in Gegenrichtung zurückläuft. Der Antrieb der Rollenkette erfolgt in an sich bekannter Weise durch einen nicht dargestellten motorischen Antrieb.

An der zu den Rollen 1 weisenden Seite der Wange 2 befindet sich ein Eingriffsschutz zur Abdeckung der rotierenden Ritzel 4 und der umlaufenden Rollenkette. Wie unschwer aus der Fig. 1 zu erkennen ist, wird dieser Eingriffsschutz aus einer Vielzahl von gleichartigen Modulen 5 gebildet. Im vorliegenden Fall ist jeweils ein Modul 5 pro Rolle 1 vorgesehen, dessen Breite dem Teilungsabstand benachbarter Rollen 1 entspricht.

Ein Modul 5 besteht im Wesentlichen aus einer vertikalen, im Einbauzustand zum langen Schenkel der Wange 3 mit zwischenabstand parallelen und zur Drehachse der Rolle 1 rechtwinklig verlaufenden Platte 9, von der aus sich annähernd rechtwinklig ein oberer Schenkel 6 und mit Abstand darunter ein unterer Schenkel 7 bis zur Wange 2 erstreckt, wodurch zwischen der Platte 9 und der Wange 3 Hohlräume für die Rollenkette und die Ritzel 4 entstehen. Beide Schenkel 6 und 7 weisen jeweils auf ihrer Oberseite einen erhaben ausgebildeten Steg 8 auf, dessen Breite in etwa der Rollenbreite der Rollenkette entspricht und für diese eine Auflage sowie auch eine seitliche Führung bildet. Die Position des oberen Schenkels 6 ist so gewählt, dass das darauf gleitende Kettenobertrum 16 in tangentialem Eingriff mit dem Ritzel 4 steht. Um ein im Lastfall durch die Kettenzugkraft bedingtes Ausweichen des oberen Schenkels 6 nach unten zuverlässig zu verhindern, wird der Schenkel 6 durch eine an seiner Unterseite angeformte, sich an der Platte 9 abstützende Rippe versteift.

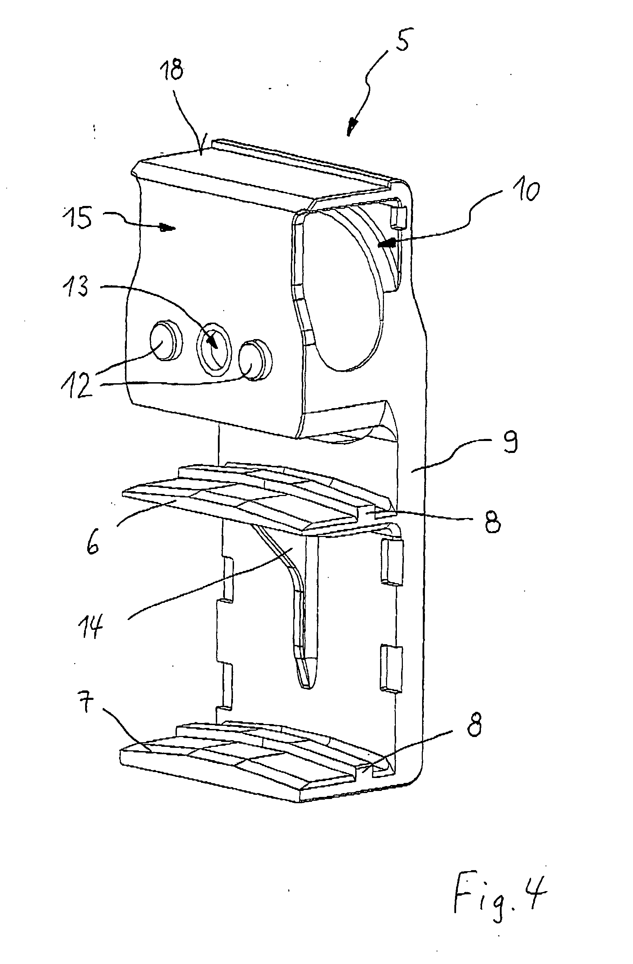

Das Modul 5 weist ferner oberhalb der beiden Schenkel 6 und 7 einen ein Ritzel 4 umfassenden Topf 10 mit einer zur Rolle 1 gerichteten, zum Einführen des Ritzels bei der Montage der Rolle 1 dienenden Öffnung 11 auf. Wie insbesondere aus der Fig. 4 erkennbar ist, besitzt der Topf 10 eine zum langen Schenkel der Wange 2 parallele und an dieser flächig anliegende Rückwand 15 auf, die eine Bohrung 13 für den Durchgriff der Schraube 3 und zwei in Richtung zur Wange 2 vorstehende zapfen 12 aufweist. Diese Zapfen 12 greifen in entsprechende Löcher in der Wange 2 formschlüssig ein und dienen zur Befestigung der Module 5 an der Wange 2. Das Anbringen der Module erfolgt durch Einclipsen der Zapfen. Die Wange 2 ist mit einem entsprechenden Lochraster für die zapfen 12 und auch die Bohrungen 13 bestückt. Die Oberseite 18 am Topf 10 liegt im Einbauzustand an der Unterseite des kurzen Schenkels der wange 2 flächig an.

Das einstückig ausgebildete Modul 5, das beispielsweise durch Spritzgiessen herstellbar ist, bildet eine allseits geschlossene Abdeckung und erlaubt eine flexible Montage. Die Module 5 werden bevorzugt aus einem kostengünstigen Kunststoffmaterial gefertigt.

Bei Abschnitten eines Rollenförderers mit einem vergrößerten Teilungsraster der Rollen 1 können zwischen zwei Modulen 5 analog ausgebildete Füllstücke zur Abdeckung der Rollenkette eingesetzt werden, wodurch dieses System nicht an ein festes Teilungsmaß gebunden ist. Ferner sind Abwandlungen des Moduls 5 dahingehend denkbar, dass ein solches Modul zur Aufnahme von zwei, drei oder auch mehreren Rollen 1 geeignet ist.

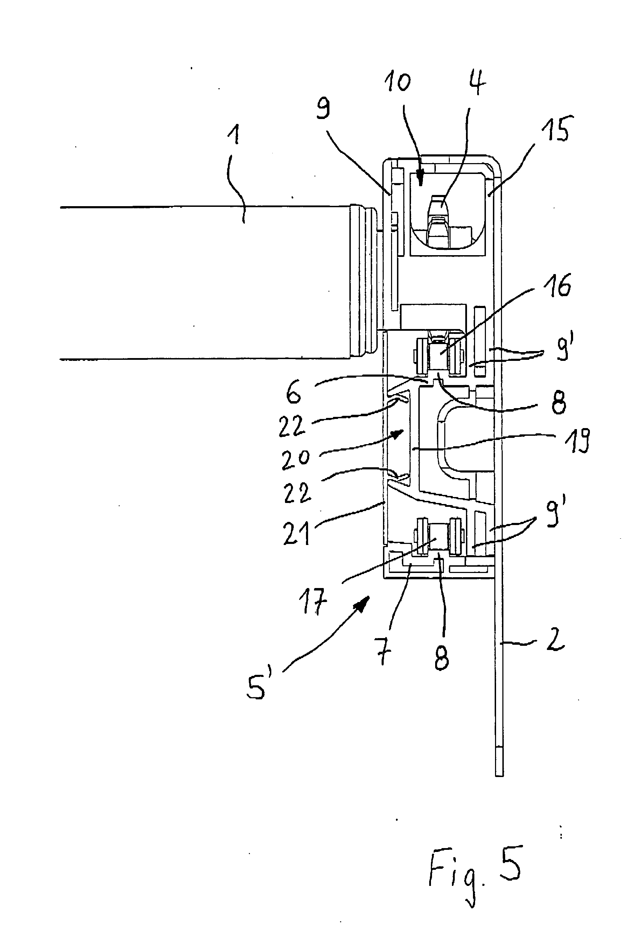

Fig. 5 zeigt eine abgewandelte Ausführungsform der Module, bei der die Hohlräume in den Modulen 5' zur Aufnahme des Kettenobertrums 16 und des Kettenuntertrums 17 der Rollenkette an der zu den Rollen 1 weisenden Seite hin offen ausgebildet sind und durch eine separate Abdeckung 21 zur Erzielung eines Eingriffschutzes verschließbar sind. Mit dieser Lösung ist eine schnellere Zugriffsmöglichkeit zur Überprüfung und Wartung der Rollenkette und ihrer Führungen gegeben.

Wie ein Vergleich mit Fig. 2 schnell erkennen lässt, besitzt die Variante nach Fig. 5 keine vom Ritzel 4 nach unten durchgehend gerade verlaufende Platte 9, sondern im Bereich der zur Kettenführung dienenden oberen und unteren Schenkel 6 und 7 an der gegenüberliegenden Seite zwischen der Rollenkette und der Wange 2 verlaufende, flächig an der Wange 2 anliegende Plattenabschnitte 9'. Alle übrigen, funktionell gleichen Bauteile sind mit den selben Bezugszeichen versehen wie die Ausführung nach Fig. 2.

Eine unter dem oberen Schenkel 6, aber mit Zwischenabstand über dem unteren Schenkel 7 von den Plattenabschnitten 9' in Richtung zu den Rollen 1 vorspringende Längsrippe 19 weist eine seitlich offene Nut 20 zum formschlüssigen Einrasten der Abdeckung 21 auf. Zu diesem Zweck sind an der Abdeckung 21 biegeelastische Zungen 22 zum formschlüssig hinterschneidenden Eingriff der Nutränder der Längsrippe 19 angeformt. Die Länge der Abdeckung 21 kann der Breite eines einzelnen Moduls 5', aber auch einem Mehrfachen dessen entsprechen. Die Abdeckung 21 kann ebenfalls aus kostengünstigem und leicht bearbeitbarem Kunststoff bestehen.

## Patentansprüche

1. Rollenförderer mit einem im Wesentlichen aus parallelen Wangen (2) gebildeten Traggestell mit mehreren quer zwischen den Wangen ausgerichteten, an diesen drehbar gelagerten Rollen (1), die an wenigstens einem Ende ein Antriebsrad (4) aufweisen, welches durch eine Abdeckung zwischen dieser und einer Wange (2) eingriffsgeschützt ist, **dadurch gekennzeichnet, dass** die Abdeckung durch mehrere nebeneinander setzbare Module (5) gebildet wird, wobei jeweils ein Modul (5) pro Rolle (1) vorgesehen ist.

2. Rollenförderer nach Anspruch 1, **dadurch gekennzeichnet, dass** die Rollen (1) mit gleichem Teilungsabstand parallel verlaufend zwischen den Wangen (2) angeordnet sind und die Breite eines Moduls (5) diesem Teilungsabstand entspricht.

3. Rollenförderer nach Anspruch 1 oder 2, **dadurch gekennzeichnet, dass** die Module (5) durch komplementär ausgebildete Befestigungselemente (12) formschlüssig an der Wange (2) befestigbar sind.

4. Rollenförderer nach Anspruch 3, **dadurch gekennzeichnet, dass** Befestigungselemente einerseits als Zapfen (12) und andererseits als Löcher ausgebildet sind, wobei die Zapfen (12) vorzugsweise an den Modulen (5) angeformt sind.

5. Rollenförderer nach wenigstens einem der vorhergehenden Ansprüche 1 bis 4, **dadurch gekennzeichnet, dass** die Module (5) Auflage- und/oder Führungsflächen (8) für ein die Rollen (1) antreibendes Zugmittel (16,17), insbesondere Rollenkette, aufweisen.

6. Rollenförderer nach Anspruch 5, **dadurch gekennzeichnet, dass** die Module (5) eine im Einbauzustand rechtwinklig zur Drehachse der Rollen (1) verlaufende Platte (9) aufweisen, von der aus rechtwinklig in Richtung zu einer Wange (2) abstehende Schenkel (6,7) die Auflage- und/oder Führungsflächen (8) aufweisen.

7. Rollenförderer nach wenigstens einem der vorhergehenden Ansprüche 1 bis 6, **dadurch gekennzeichnet, dass** die Module (5) im Einbauzustand zusammen mit einer Wange (2) ein die Antriebsräder (4) und das diese treibende Zugmittel (16,17) umschließendes, geschlossenes Gehäuse bilden.

8. Rollenförderer nach wenigstens einem der vorhergehenden Ansprüche 1 bis 7, **dadurch gekennzeichnet, dass** ein Modul (5) einstückig ausgebildet ist, vorzugsweise als ein Spritzgussteil, insbesondere aus Kunststoff.

9. Modul (5) ausgebildet für einen Rollenförderer gemäß wenigstens einem der Ansprüche 1 bis 8.

## Claims

1. Roller conveyors with a supporting structure essentially comprising parallel side plates with several transverse rollers (1) disposed between the side plates and supported on them such that they can rotate, the said rollers having a drive gear, on at least one of their ends, that is shielded from engagement by a cover member between the said drive gear and a side plate, **characterized in that** the cover member is formed of several modules (5) that can be placed side-by-side, whereby there is, in each case, one module (5) per roller (1).

2. Roller conveyor in accordance with claim 1, **characterized in that** the rollers (1) are uniformly separated, running parallel between the side plates (2), and **in that** the gap between rollers is equal to the width of a module (5).

3. Roller conveyor in accordance with claims 1 or 2, **characterized in that** the modules (5) are attached, form-locking, to the side plate (2) by means of supplementary attachment elements (12).

4. Roller conveyor in accordance with claim 3, **characterized in that** attachment elements are, on one side, formed as pins (12) and, on the other side, as holes, whereby the pins (12) are preferably formed on the modules (5).

5. Roller conveyor in accordance with at least one of the preceding claims 1 to 4, **characterized in that** the modules (5) have rests and/or guide surfaces (8) for a traction means (16, 17), particularly a roller chain, that drives the rollers (1).

6. Roller conveyor in accordance with claim 5, **characterized in that** the modules (5) have a plate (9) that is at right-angles to the rotation axis of the rollers, in the assembled state, and from which side pieces (6, 7), having the rests and/or guide surfaces, project at right-angles, in the direction of a side plate (2).

7. Roller conveyor in accordance with at least one of the preceding claims 1 to 6, **characterized in that** the modules (5) form, together with a side plate (2), in the assembled stated, a closed housing surrounding the gear (4) and the traction means (16, 17) that drives this gear.

8. Roller conveyor in accordance with at least one of the preceding claims 1 to 7, **characterized in that** a module (5) is formed as a single piece, preferably as an injection moulding, especially a plastic one.

9. Module (5) developed for a roller conveyor in accordance with at least one of claims 1 to 8.

## Revendications

1. Convoyeur à rouleaux comportant un châssis formé principalement de flancs parallèles (2) et ayant plusieurs rouleaux (1) alignés transversalement entre les flancs sur lesquels ils sont montés à rotation, au moins une extrémité des rouleaux ayant une roue motrice (4) dont l'accès est protégé par un capot situé entre la roue (4) et le flanc (2),
**caractérisé en ce que**
le capot est formé de plusieurs modules (5) juxtaposés avec, chaque fois, un module (5) par rouleau (1).

2. Convoyeur à rouleaux selon la revendication 1,
**caractérisé par**
les rouleaux (1) sont disposés parallèlement avec le même pas entre les flancs (2) et la largeur d'un module (5) correspond à ce pas.

3. Convoyeur à rouleaux selon la revendication 1 ou 2,
**caractérisé par**
des éléments de fixation (12) de forme complémentaire qui fixent les modules (5) au flanc (2) par une liaison par la forme.

4. Convoyeur à rouleaux selon la revendication 3,
**caractérisé en ce que**
les éléments de fixation ont d'un côté un tourillon (12) et de l'autre, un orifice, les tourillons (12) étant réalisés de préférence sur les modules (5).

5. Convoyeur à rouleaux selon les revendications 1 à 4,
**caractérisé en ce que**
les modules (5) ont des surfaces d'appui et/ou de guidage (8) pour un moyen de traction (16, 17) notamment une chaîne à galets qui entraîne les rouleaux (1).

6. Convoyeur à rouleaux selon la revendication 5,
**caractérisé en ce que**
les modules (5) ont une plaque (9) qui, à l'état monté, est perpendiculaire à l'axe de rotation des rouleaux (1), et perpendiculairement à la direction d'un flanc (2), la plaque comporte des branches (6, 7) munies de surfaces d'appui et/ou de guidage (8).

7. Convoyeur à rouleaux selon les revendications 1 à 6,
**caractérisé en ce que**
à l'état monté les modules (5) constituent avec un flanc (2), un boîtier fermé entourant les roues motrices (4) et le moyen de traction (16, 17) entraînant ces roues.

8. Convoyeur à rouleaux selon les revendications 1 à 7,
**caractérisé par**
un module (5) en une seule pièce, réalisée de préférence comme pièce injectée, notamment en matière plastique.

9. Module (5) réalisé pour un convoyeur à rouleaux selon les revendications 1 à 8.
